# FASCICULE DE BREVET EUROPEEN

(11) **EP 1 652 708 B1**
(45) Date de publication et mention de la délivrance du brevet: **20.02.2008**
(21) Numéro de dépôt: 05300880.1
(22) Date de dépôt: 28.10.2005
(51) Int. Cl.: B60J 5/10, E05F 15/20

(54) **Structure de hayon pour véhicule automobile et véhicule automobile comportant une telle structure de hayon**
Heckklappenanordnung für ein Kraftfahrzeug und Kraftfahrzeug mit einer solchen Heckklappenanordnung
Hatchback structure for a motor vehicle and motor vehicle with such a hatchback structure

(30) Priorité: 02.11.2004 FR 0411664
(43) Date de publication de la demande: 03.05.2006
(73) Titulaire: Peugeot Citroën Automobiles, 78140 Vélizy-Villacoublay (FR)
(72) Inventeur: Leroux, Charles, 78830 Bullion (FR); Lavernhe, Jérôme, 78000 Versailles (FR)

(56) Documents cités:
- EP-A- 1 134 104
- WO-A-20/05070715
- DE-A1- 10 233 764

## Description

La présente invention concerne une structure de hayon pour un véhicule automobile et un véhicule automobile équipé d'une telle structure de hayon.

Certains véhicules automobiles sont munis à l'arrière d'un ouvrant qui est disposé transversalement à l'arrière de la caisse du véhicule et qui donne accès à la partie arrière de l'habitacle de ce véhicule dans sa position ouverte.

L'ouvrant arrière le plus couramment utilisé est constitué par un hayon muni au niveau de son bord supérieur, de moyens d'articulation sur le pavillon du véhicule, de sorte qu'il peut être déplacé entre une position de fermeture et une position d'ouverture, par déplacement angulaire autour de ces moyens d'articulation.

Le principal inconvénient de ce type d'ouvrant réside dans son débattement qui est important et qui oblige donc l'utilisateur du véhicule équipé d'un tel ouvrant à placer l'arrière du véhicule suffisamment loin d'un obstacle pour placer l'ouvrant en position d'ouverture.

On connaît également un ouvrant arrière d'un véhicule automobile qui est déplaçable entre une position d'ouverture et une position de fermeture et qui comprend deux panneaux, un panneau supérieur et un panneau inférieur associés l'un à l'autre. Le panneau supérieur est articulé à la caisse du véhicule par un axe horizontal et associé au panneau inférieur par des moyens d'entraînement de ce dernier de façon qu'en déplaçant l'ouvrant de sa position de fermeture à sa position d'ouverture, le panneau inférieur est entraîné au-dessous du panneau supérieur suivant une trajectoire circulaire.

Si un tel ouvrant permet effectivement de réduire l'espace nécessaire à l'arrière du véhicule lors de son ouverture, son principal inconvénient réside dans le fait qu'il est lourd et pénible à manoeuvrer pour l'utilisateur à cause de la liaison entre les deux panneaux.

De plus, cette liaison entre les panneaux oblige l'utilisateur à les manoeuvrer ensemble pour accéder à l'intérieur du véhicule et elle est dangereuse lors de la manipulation des panneaux notamment pour les doigts d'un utilisateur qui peuvent être coincés entre les deux panneaux.
La publication WO-A-2005/670715 divulgue une structure de hayon d'après le préambule de la revendication 1.

L'invention a pour but de proposer une structure de hayon qui permet par des moyens simples, de palier à ces différents inconvénients, tout en facilitant l'accès au volume de chargement du véhicule automobile.

L'invention a donc pour objet une structure de hayon pour véhicule automobile, du type comprenant un panneau supérieur et un panneau inférieur déplaçables entre une position de fermeture et une position d'ouverture, les panneaux étant indépendants et montés chacun articulé sur la caisse du véhicule par un axe horizontal, le panneau supérieur étant déplaçable entre les deux positions indépendamment du panneau inférieur et les deux panneaux étant déplaçables entre lesdites deux positions simultanément par des moyens d'actionnement et de synchronisation du basculement de ces deux panneaux suivant une trajectoire circulaire pour qu'en position d'ouverture les bords inférieurs des deux panneaux soient disposés sensiblement l'un au-dessus de l'autre.

Selon d'autres caractéristiques :
- les panneaux inférieur et supérieur comprennent chacun au moins un élément de verrouillage en position de fermeture,
- les moyens d'actionnement comprennent un organe de commande du déverrouillage de l'élément de verrouillage du panneau supérieur et un organe de commande du déverrouillage simultané des organes de verrouillage des deux panneaux,
- les organes de commande sont actionnés manuellement ou à distance par une télécommande,
- les moyens de synchronisation comprennent un capteur angulaire monté sur l'axe d'articulation du panneau supérieur et relié à un boîtier électronique d'asservissement et un système d'entraînement motorisé relié à l'axe d'articulation du panneau inférieur et commandé par ledit boîtier en fonction des informations fournies par ledit capteur angulaire,
- les moyens de synchronisation comprennent un capteur angulaire monté sur l'axe d'articulation du panneau inférieur et relié au boîtier électronique d'asservissement,
- les moyens de synchronisation comprennent un système d'entraînement motorisé relié à l'axe d'articulation du panneau supérieur,
- le panneau inférieur comporte au moins un organe d'assistance au basculement interposé entre la caisse du véhicule et ledit panneau, et
- le panneau supérieur comporte au moins un organe d'assistance au basculement interposé entre la caisse du véhicule et ledit panneau.

L'invention a également pour objet un véhicule automobile, qui comprend un structure de hayon telle que précédemment mentionnée.

Des caractéristiques et avantages de l'invention apparaîtront au cours de la description qui va suivre, donnée à titre d'exemple et faite en se référant aux dessins annexés, sur lesquels :
- la Fig. 1 est une vue schématique en perspective de la partie arrière d'un véhicule automobile équipée d'une structure de hayon.
- la Fig. 2 est une vue schématique en coupe longitudinale de la partie arrière du véhicule automobile avec la structure de hayon dans sa position de fermeture,
- la Fig. 3 est un schéma montrant les différents éléments des moyens d'actionnement et de synchronisation des panneaux de la structure de hayon, conforme à l'invention,
- la Fig. 4 est une vue schématique en coupe longitudinale de la partie arrière du véhicule automobile avec la structure de hayon en position d'ouverture du panneau supérieur, et
- la Fig. 5 est une vue schématique en coupe longitudinale de la partie arrière du véhicule automobile avec la structure de hayon dans la position d'ouverture des deux panneaux.

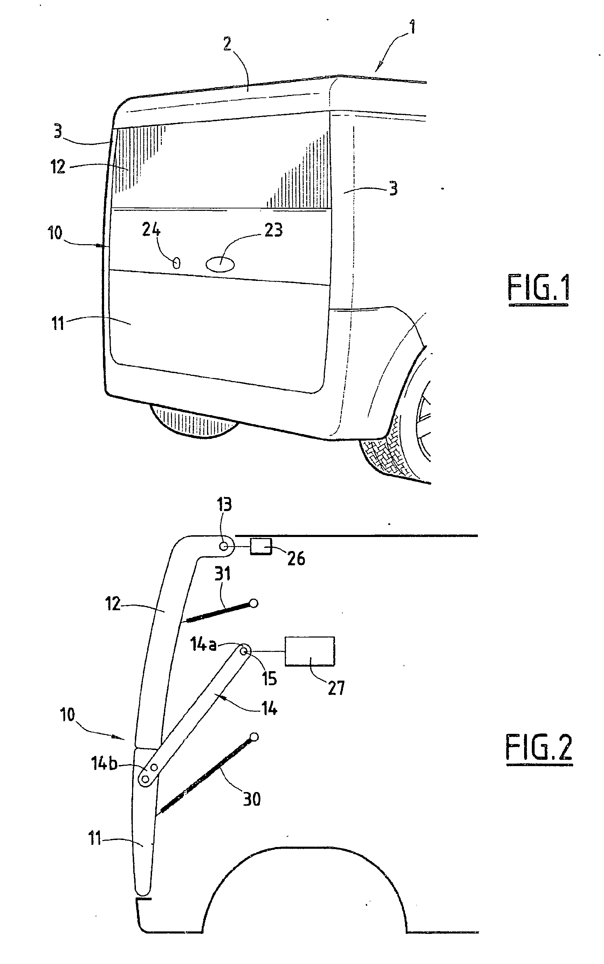

Sur la Fig. 1, on a représenté schématiquement la partie arrière d'un véhicule automobile qui comporte, de manière classique, une caisse 1 formant un habitacle délimité notamment par un plancher, non représenté, un pavillon 2, deux parois latérales 3 et, à sa partie postérieure, par une structure de hayon désignée par la référence générale 10.

La structure de hayon 10 se compose d'un panneau inférieur 11 et un panneau supérieur 12 indépendants et juxtaposés l'un au-dessus de l'autre.

Les panneaux 11 et 12 sont déplaçables entre une position de fermeture et une position d'ouverture et, pour cela, le panneau supérieur 12 est monté articulé sur la caisse 1 du véhicule et notamment sur le bord arrière du pavillon 2 de cette caisse à l'aide d'un axe 13 d'articulation formé par exemple de deux charnières positionnées entre le bord supérieur du panneau supérieur 12 et le bord arrière du pavillon 2. De manière classique, les charnières formant l'axe d'articulation 13 sont disposées de manière symétrique par rapport à l'axe longitudinal du véhicule automobile.

Le panneau inférieur 11 est également monté articulé sur la caisse 2 du véhicule et plus particulièrement sur les deux parois latérales 3 à l'aide de deux bras 14 symétriques par rapport à l'axe longitudinal du véhicule. Chaque bras 14 est situé dans un plan vertical parallèle au plan médian longitudinal du véhicule et a une première extrémité 14a articulée sur l'une des parois latérale 3 de la caisse 1 et une seconde extrémité 14b articulée sur le bord supérieur du panneau inférieur 11.

Les extrémités 14a des bras 14 sont articulées autour d'un axe d'articulation 15 sensiblement horizontal et situé en-dessous de l'axe d'articulation 13 du panneau supérieur 12, ainsi que montré à la Fig. 2.

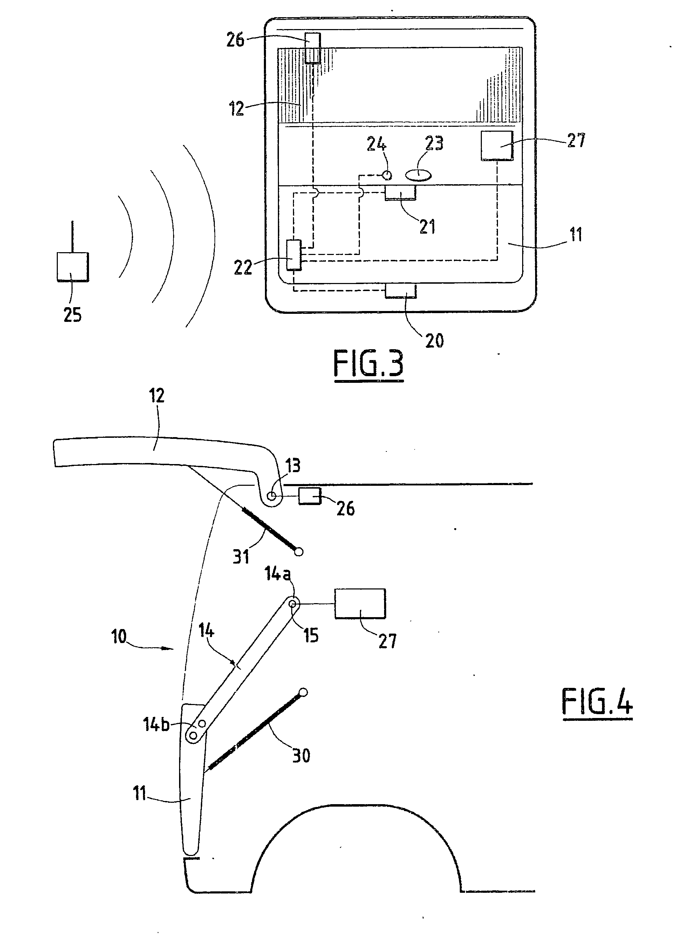

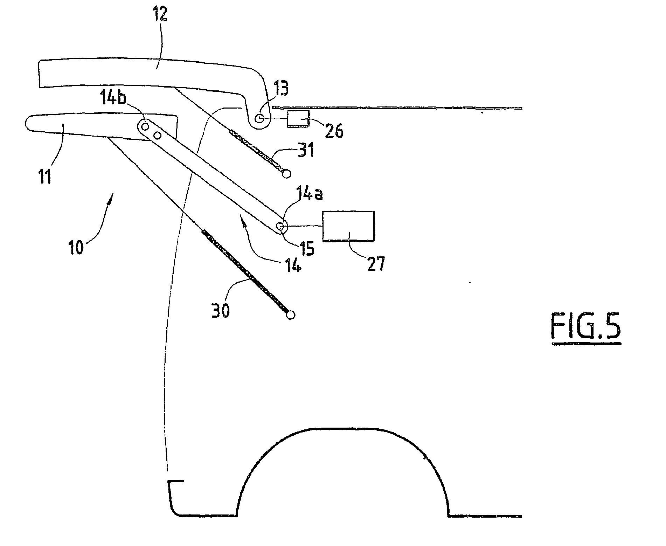

D'une manière générale, le panneau supérieur 12 est déplaçable entre la position de fermeture (Fig. 2) et la position d'ouverture (Fig. 4) indépendamment du panneau inférieur 11 et en maintenant ce panneau inférieur 11 en position de fermeture. De plus, les deux panneaux 11 et 12 sont déplaçables entre les deux positions, respectivement de fermeture (Fig. 2) et d'ouverture (Fig. 5), simultanément par des moyens d'actionnement et de synchronisation du basculement de ces panneaux 11 et 12 suivant une trajectoire circulaire pour qu'en position d'ouverture les bords inférieurs des deux panneaux soient disposés sensiblement l'un au-dessus de l'autre (Fig. 5).

Sur la Fig. 3, on a représenté schématiquement la paroi arrière du véhicule automobile 1, munie des panneaux, respectivement inférieur 11 et supérieur 12. Ces panneaux 11 et 12 comprennent chacun au moins un élément de verrouillage en position de fermeture et qui est constitué pour le panneau 11, par au moins une serrure 20 contrôlée électriquement et interposée entre ce panneau 11 et la caisse 2 du véhicule automobile et pour la panneau 12, par au moins une serrure 21 contrôlée électriquement et interposée entre le panneau inférieur 11 et le panneau supérieur 12. L'élément de verrouillage du panneau supérieur 12 en position de fermeture peut-être constitué par deux serrures, non représentées, et disposées entre les côtés de ce panneau supérieur 12 et la caisse 2 du véhicule automobile.

Ainsi que montré sur la Fig. 3, les éléments de verrouillage 20 et 21 sont reliés à un boîtier électronique 22 d'asservissement et de gestion.

Les moyens d'actionnement de l'ouverture du panneau supérieur 12 ou de l'ouverture des panneaux 11 et 12 comprennent un organe de commande 23 du déverrouillage de l'élément de verrouillage 21 du panneau supérieur 12 et un organe de commande 24 du déverrouillage simultané des organes de verrouillage 20 et 21 des deux panneaux 11 et 12. L'organe de commande 24 est relié au boîtier 22 et les organes de commande 23 et 24 peuvent être actionnés manuellement ou à distance par une télécommande 25. Les organes de commande 23 et 24 sont conçus de forme et de dimensions différentes pour permettre à l'utilisateur de les différencier à la vue et au toucher.

Les moyens de synchronisation du basculement des panneaux 11 et 12 lorsque l'utilisateur agit sur l'organe de commande 24 comprennent un capteur angulaire 26 monté sur l'axe d'articulation 13 du panneau supérieur 12 et qui est relié au boîtier 22. Ces moyens de synchronisation comprennent également un système d'actionnement 27 motorisé relié à l'axe d'articulation 15 du panneau inférieur 11 et qui est commandé par le boîtier 22 en fonction des informations fournies par le capteur angulaire 26, comme cela sera décrit ultérieurement.

Ce système d'entraînement 27 est formé par exemple par un motoréducteur électromécanique ou électrohydraulique et il comporte un capteur angulaire, non représenté, qui permet de mesurer l'angle et la vitesse d'ouverture et de fermeture du panneau inférieur 11 par rapport la caisse 2, tandis que la capteur angulaire 26 permet de mesurer la vitesse angulaire à l'ouverture et à la fermeture du panneau supérieur 12 par rapport à la caisse 2 du véhicule automobile.

Le boîtier électronique 22 permet de gérer le fonctionnement électrique et les informations électriques des organes de commande 23 et 24, des éléments de verrouillage 20 et 21, du capteur angulaire 26 et du système d'entraînement 27.

Ainsi que montré à la Fig. 2, le panneau inférieur 11 comporte au moins un organe d'assistance 30 au basculement interposé entre la caisse 2 du véhicule et ce panneau inférieur 11 et le panneau supérieur 12 comporte également au moins un organe d'assistance 31 au basculement interposé entre la caisse 2 du véhicule et ce panneau supérieur 12. Les organes d'assistance 30 et 31 sont constitués, pour chaque panneau 11 et 12, par deux ressorts mécaniques ou à gaz.

Pour l'ouverture manuelle du panneau supérieur 12 uniquement, l'utilisateur agit sur l'organe de commande 23 ce qui a pour effet de déverrouiller l'élément de verrouillage 21. Les organes d'assistance 31 font basculer le panneau supérieur 12 autour de son axe d'articulation 13 de la position de fermeture représentée à la Fig. 2 à la position d'ouverture représentée à la Fig. 4, le panneau inférieur 11 restant en position de fermeture. Les organes d'assistance 31 sont disposés de façon à ce qu'ils soient moteurs dès le déverrouillage et ils fournissent l'énergie nécessaire à l'ouverture du panneau supérieur 12.

Pour l'ouverture du panneau supérieur 12 à distance, l'utilisateur appuie sur une touche spécifique de la télécommande 25 qui donne l'ordre, au boîtier 22 de déverrouiller l'organe de verrouillage 21. Dès le déverrouillage de cet organe 21, les organes d'assistance 31 font basculer le panneau 12 de sa position de fermeture à sa position d'ouverture, le panneau inférieur 11 restant en position de fermeture.

La fermeture du panneau supérieur 12 est effectuée manuellement de façon classique.

Pour l'ouverture manuelle et simultanée des panneaux 11 et 12, l'utilisateur agit sur l'organe de commande 24 ce qui a pour effet de déverrouiller les organes de verrouillage 20 et 21. Les organes d'assistance 31 font basculer le panneau supérieur 12 de sa position de fermeture vers sa position d'ouverture autour de l'axe d'articulation 13 qui entraîne en rotation le capteur angulaire 26. L'action sur l'organe de commande 23 permet l'activation du système d'entraînement 27 du panneau inférieur 11 par l'intermédiaire du boîtier 22. Ce système d'entraînement 27 assure le basculement du panneau inférieur 11 de sa position de fermeture vers sa position d'ouverture et ce basculement est assisté par les organes 30. Le capteur angulaire 26 donne les informations de l'angle et de la vitesse angulaire d'ouverture du panneau supérieur 12 au boîtier 22 qui assure l'asservissement du système d'entraînement 27 pour synchroniser l'ouverture du panneau inférieur 11 avec celle du panneau supérieur 12 jusqu'à une ouverture de l'ensemble, ainsi que montré à la Fig. 5, et dans laquelle les bords inférieurs des panneaux 11 et 12 sont disposés sensiblement l'un au dessus de l'autre. Dès que les panneaux 11 et 12 atteignent la position d'ouverture maximale détectée par le capteur angulaire 26, le boîtier 22 donne l'ordre d'arrêt au système d'entraînement 27.

Pour une ouverture à distance, l'utilisateur agit sur une autre touche spécifique de la télécommande 25 qui donne l'ordre au boîtier 22 de déverrouiller les organes de verrouillage 20 et 21 et le basculement des panneaux 11 et 12 est identique à celui décrit précédemment.

La fermeture des panneaux 11 et 12 est obtenue par la fermeture manuelle du panneau supérieur 12 et la fermeture du panneau inférieur 11 est réalisée par le système d'entraînement 27. Dès le basculement manuel du panneau supérieur 12, le capteur angulaire 26 donne les informations de l'angle et de la vitesse angulaire de fermeture de ce panneau supérieur 12 au boîtier 22 qui assure l'asservissement du système d'entraînement 27 pour synchroniser la fermeture du panneau inférieur 11 avec celle du panneau supérieur 12 jusqu'à la fermeture complète de ces panneaux 11 et 12. Dès que l'organe de verrouillage 20 est verrouillé, l'information est transmise au boîtier 22 qui donne l'ordre de verrouillage de l'organe de verrouillage 21 du panneau supérieur 12. Le panneau inférieur 11 peut être fermé manuellement en faisant basculer ce panneau 11 autour de son axe d'articulation 15.

Ce panneau inférieur 11 peut être fermé automatiquement tout en laissant le panneau supérieur 12 en position d'ouverture. Dans ce cas, l'utilisateur agit sur une touche spécifique de la télécommande 13 ce qui provoque par l'intermédiaire du boîtier 22 l'actionnement du système d'entraînement 27. Ce système d'entraînement 27 fait basculer le panneau inférieur 11 de sa position d'ouverture vers sa position de fermeture et, au cours de ce basculement, le capteur angulaire du système d'entraînement 27 donne les informations de l'angle et de la vitesse angulaire de fermeture du panneau inférieur 11 au boîtier 22 qui assure l'asservissement du système d'entraînement 27 jusqu'à la fermeture de ce panneau inférieur 11. L'organe de verrouillage 20 permet le verrouillage en position de fermeture du panneau inférieur 11.

Selon une variante, le basculement du panneau supérieur 12 entre sa position de fermeture et sa position d'ouverture ou inversement peut être réalisé par un système d'entraînement de type classique, non représenté, relié mécaniquement à l'axe d'articulation 13 de ce panneau supérieur 12. Dans ce cas, la synchronisation de l'ouverture ou de la fermeture des panneaux 11 et 12, ainsi que du déverrouillage et du verrouillage de l'ensemble, est pilotée par le boîtier 22 qui traite les informations fournies par le capteur angulaire 26 du panneau supérieur 12 et celui intégré au système d'entraînement 27 du panneau inférieur 11 et agit sur le fonctionnement des deux systèmes d'entraînement pour synchroniser l'ouverture ou la fermeture des panneaux 11 et 12. Le système est donc totalement motorisé et automatisé et peut aussi être commandé à distance.

La structure selon l'invention présente l'avantage de pouvoir ouvrir seulement une partie du hayon ou la totalité de cet hayon en fonction des éléments à charger dans le véhicule automobile.

De plus, elle présente un débattement réduit ce qui est idéal pour le chargement en ville lorsque d'autres véhicules se garent trop près ce qui facilite le chargement notamment dans le cas de transport d'objets encombrants.

## Revendications

1. Structure de hayon pour véhicule automobile, du type comprenant un panneau inférieur (11) et un panneau supérieur (12) déplaçables entre une position de fermeture et une position d'ouverture, les panneaux (11, 12) étant indépendants et montés chacun articulé sur la caisse (2) du véhicule (1) par un axe horizontal (13, 15), le panneau supérieur (12) étant déplaçable entre les deux positions, indépendamment du panneau inférieur (11), et les deux panneaux (11, 12) étant déplaçables entre lesdites deux positions simultanément par des moyens (20, 21, 22, 23, 24, 26, 27) d'actionnement et de synchronisation du basculement de ces panneaux (11, 12) suivant une trajectoire circulaire pour qu'en position d'ouverture les bords inférieurs des deux panneaux (11, 12) soient disposés sensiblement l'un au-dessus de l'autre, **caractérisé en ce que** les rayons de synchronisation comprennent un capteur angulaire (26) donnant des informations relatives au panneau supérieur (12) à un boîtier électrique (22) d'asservissement auquel il est relié et, un système d'entraînement (27) motorisé relié au panneau inférieur (11) et commandé par ledit boîtier (22) en fonction des informations fournies par ledit capteur angulaire (26).

2. Structure de hayon suivant la revendication 1, **caractérisée en ce que** les panneaux inférieur (11) et supérieur (12) comprennent chacun au moins un élément de verrouillage (20, 21) en position de fermeture.

3. Structure de hayon suivant la revendication 1 ou 2, **caractérisée en ce que** les moyens d'actionnement comprennent un organe de commande (23) du déverrouillage de l'élément de verrouillage (21) du panneau supérieur (12) et un organe de commande (24) du déverrouillage simultané des organes de verrouillage (20, 21) des deux panneaux (11, 12).

4. Structure de hayon selon la revendication 3, **caractérisée en ce que** les organes de commande (23, 24) sont actionnés manuellement ou à distance par une télécommande (25).

5. Structure de hayon selon l'une quelconque des revendications 1 à 4, **caractérisée en ce que** le capteur angulaire (26) est monté sur l'axe d'articulation (13) du panneau supérieur (12).

6. Structure de hayon selon la revendication 5, **caractérisée en ce que** les moyens de synchronisation comprennent un capteur angulaire monté sur l'axe d'articulation du panneau inférieur (11) et relié au boîtier électronique (22).

7. Structure de hayon selon la revendication 5 ou 6, **caractérisée en ce que** les moyens de synchronisation comprennent un système d'entraînement motorisé relié à l'axe d'articulation (13) du panneau supérieur (12).

8. Structure de hayon selon l'une quelconque des revendications 1 à 7, **caractérisée en ce que** le panneau inférieur (11) comporte au moins un organe d'assistance (30) au basculement interposé entre la caisse (2) du véhicule et ledit panneau (11).

9. Structure de hayon selon l'une quelconque des revendications 1 à 8, **caractérisée en ce que** le panneau supérieur (12) comporte au moins un organe d'assistance (31) au basculement interposé entre la caisse (2) du véhicule et ledit panneau (12).

10. Véhicule automobile, **caractérisé en ce qu**'il comprend une structure de hayon (10) selon l'une quelconque des revendications précédentes.

## Claims

1. Hatch structure for a motor vehicle, of the type comprising a lower panel (11) and an upper panel (12) which are able to move between a closed position and an open position, the panels (11, 12) being independent and each being hinge-mounted on the body (2) of the vehicle (1) by means of a horizontal pin (13, 15), the upper panel (12) being able to move between the two positions independently of the lower panel (11), the two panels (11, 12) being able to move between the said two positions simultaneously using means (20, 21, 22, 23, 24, 26, 27) for actuating and synchronizing the tilting of these panels (11, 12) along a circular path such that, in the open position, the lower edges of the two panels (11, 12) are arranged substantially one above the other, **characterized in that** the synchronizing means comprise an angular sensor (26) which gives information relating to the upper panel (12) to an electronic servo-control unit (22) to which it is connected, and a motorized drive system (27) connected to the lower panel (11) and controlled by the said unit (22) as a function of the information provided by the said angular sensor (26).

2. Hatch structure according to Claim 1, **characterized in that** the lower (11) and upper (12) panels each comprise at least one element (20, 21) for locking them in the closed position.

3. Hatch structure according to Claim 1 or 2, **characterized in that** the actuating means comprise a control member (23) for unlocking the locking element (21) of the upper panel (12) and a control member (24) for the simultaneous unlocking of the locking members (20, 21) of the two panels (11, 12).

4. Hatch structure according to Claim 3, **characterized in that** the control members (23, 24) are actuated manually or remotely by a remote control (25).

5. Hatch structure according to any one of Claims 1 to 4, **characterized in that** the angular sensor (26) is mounted on the hinge pin (13) of the upper panel (12).

6. Hatch structure according to Claim 5, **characterized in that** the synchronizing means comprise an angular sensor mounted on the hinge pin of the lower panel (11) and connected to the electronic unit (22).

7. Hatch structure according to Claim 5 or 6, **characterized in that** the synchronizing means comprise a motorized drive system connected to the hinge pin (13) of the upper panel (12).

8. Hatch structure according to any one of Claims 1 to 7, **characterized in that** the lower panel (11) includes at least one tilt assist member (30) interposed between the body (2) of the vehicle and the said panel (11).

9. Hatch structure according to any one of Claims 1 to 8, **characterized in that** the upper panel (12) includes at least one tilt assist member (31) interposed between the body (2) of the vehicle and the said panel (12).

10. Motor vehicle, **characterized in that** it comprises a hatch structure (10) according to any one of the preceding claims.

## Patentansprüche

1. Heckklappenanordnung für ein Kraftfahrzeug von dem Typ, der eine untere Bordwand (11) und eine obere Bordwand (12) aufweist, die zwischen einer Schließstellung und einer Öffnungsstellung beweglich sind, wobei die Bordwände (11, 12) unabhängig und je an den Aufbau (2) des Fahrzeugs (1) über eine waagrechte Achse (13, 15) gelenkig montiert sind, wobei die obere Bordwand (12) zwischen den zwei Stellungen unabhängig von der unteren Bordwand (11) beweglich ist, und die zwei Bordwände (11, 12) zwischen den zwei Stellungen gleichzeitig durch Betätigungs- und Synchronisationseinrichtungen (20, 21, 22, 23, 24, 26, 27) des Kippens dieser zwei Bordwände (11, 12) gemäß einer Kreisstrecke beweglich sind, damit in der Öffnungsstellung die unteren Ränder der zwei Bordwände (11, 12) im Wesentlichen einer über dem anderen angeordnet sind, **dadurch gekennzeichnet, dass** die Synchronisationseinrichtungen einen Winkelsensor (26), der Informationen bezüglich der oberen Bordwand (12) an ein Regelungs-Elektronikgehäuse (22) liefert, mit dem er verbunden ist, und ein motorisiertes Antriebssystem (27) aufweisen, das mit der unteren Bordwand (11) verbunden ist und von dem Gehäuse (22) in Abhängigkeit von den vom Winkelsensor (26) gelieferten Informationen gesteuert wird.

2. Heckklappenanordnung nach Anspruch 1, **dadurch gekennzeichnet, dass** die untere (11) und die obere (12) Bordwand je mindestens ein Verriegelungselement (20, 21) in der Schließstellung aufweisen.

3. Heckklappenanordnung nach Anspruch 1 oder 2, **dadurch gekennzeichnet, dass** die Betätigungseinrichtungen ein Steuerorgan (23) zur Entriegelung des Verriegelungselements (21) der oberen Bordwand (12) und ein Steuerorgan (24) zur gleichzeitigen Entriegelung der Verriegelungsorgane (20, 21) der zwei Bordwände (11, 12) aufweisen.

4. Heckklappenanordnung nach Anspruch 3, **dadurch gekennzeichnet, dass** die Steuerorgane (23, 24) manuell oder aus der Ferne durch eine Fernbedienung (25) betätigt werden.

5. Heckklappenanordnung nach einem der Ansprüche 1 bis 4, **dadurch gekennzeichnet, dass** der Winkelsensor (26) auf die Gelenkachse (13) der oberen Bordwand (12) montiert ist.

6. Heckklappenanordnung nach Anspruch 5, **dadurch gekennzeichnet, dass** die Synchronisationseinrichtungen einen Winkelsensor aufweisen, der auf die Gelenkachse der unteren Bordwand (11) montiert und mit dem Elektronikgehäuse (22) verbunden ist.

7. Heckklappenanordnung nach Anspruch 5 oder 6, **dadurch gekennzeichnet, dass** die Synchronisationseinrichtungen ein Motorantriebssystem aufweisen, das mit der Gelenkachse (13) der oberen Bordwand (12) verbunden ist.

8. Heckklappenanordnung nach einem der Ansprüche 1 bis 7, **dadurch gekennzeichnet, dass** die untere Bordwand (11) mindestens ein Kipphilfeorgan (30) aufweist, das zwischen den Aufbau (2) des Fahrzeugs und die Bordwand (11) eingefügt ist.

9. Heckklappenanordnung nach einem der Ansprüche 1 bis 8, **dadurch gekennzeichnet, dass** die obere Bordwand (12) mindestens ein Kipphilfeorgan (31) aufweist, das zwischen den Aufbau (2) des Fahrzeugs und die Bordwand (12) eingefügt ist.

10. Kraftfahrzeug, **dadurch gekennzeichnet, dass** es eine Heckklappenanordnung (10) nach einem der vorhergehenden Ansprüche aufweist.
